# EUROPEAN PATENT APPLICATION

(11) **EP 0 824 861 A2**
(43) Date of publication of application: **25.02.1998**
(21) Application number: 97306424.9
(22) Date of filing: 22.08.1997
(51) Int. Cl.: A01M 21/04, A01M 7/00

(54) **Application of agrichemicals**

(30) Priority: 23.08.1996 NZ 29922496
(71) Applicant: Bisset Engineering International Limited, Ashburton (NZ)
(72) Inventor: Bisset, Wilfred Francis David, Asburton (NZ)
(74) Representative: Lee, Nicholas John

(57) **Abstract**

An improved roller applicator as described which is used to apply liquid herbicides or similar substances to weed foliage extending above a crop. The application device is in the form of a roller which is supplied by a controllable dispersal means which supplies an agrichemical product to the application roller. The application roller is shrouded in an enclosure which is constructed so as to surround at least a portion of the application roller whereby the portion which protrudes can brush the agrichemical product onto the weed foliage. The improved roller is specifically adapted to prevent spray and drip leakage from the application enclosure by means of sealing members arrayed linearly along the junction of the roller and the enclosure shroud.

## Description

The present invention relates to roller applicators used to apply liquid herbicides or similar substances to weed foliage extending above a crop. More particularly, although not exclusively, the present invention relates to improvements in the application or dispersal of agrichemicals to the rollers which apply the agrichemical to the weed foliage.

Roller applicators are well known in the application of liquid, gel or similar forms of agrichemical. Such applicators operate by exploiting the diffirential grown height of weeds and crops whereby a horizontal, herbicide coated roller is transported through a crop at a height whereby the roller applicator will brush or otherwise apply the herbicide to foliage or vegetation associated with the weeds but not contact the crop.

Prior art roller applicators have a number of inherent disadvantages. For example, if the agrichemical is deposited on an application roller by means of a spray, contamination can occur whereby the agrichemical aerosol or vapour is deposited onto the crop rather than exclusively the weed. Similarly, where a reservoir roller is used to contain and disburse the agrichemical onto the application roller, dripping and wind born dispersal of the agrichemical can lead to crop contamination Wind blown contamination can also occur if the application roller is coated by means of a spray, vapour or aerosol.

In one aspect the invention provides for an improved agrichemical roller applicator comprising an application roller;
a controllable dispersal means adapted to supply an agrichemical product to the application roller;
an enclosure constructed so as to surround a segment of the application roller, and the dispersal means in such a manner that the dispersal means is located inside the enclosure and at least a portion of a surface of the application roller is located proximate an opening in the enclosure wherein the opening incorporates sealing members adapted to prevent dispersal of the agrichemical from the enclosure other than by its application to the portion of the application roller proximate the opening.

Preferably the dispersal means is a spray nozzle or dispersal roller.

Preferably the enclosure is a elongate box structure incorporating a lengthwise opening having dimensions adapted to accommodate at least a portion of the application roller in such a manner that the dispersal means can apply the agrichemical onto a portion of the application roller proximate the opening.

Preferably the sealing means correspond to elongate flaps attached to a first and second lengthwise edge of the lengthwise opening in the enclosure and are oriented so that when the application roller is located proximate the opening and rotated, a first and second sealing means present a lenghwise seal biased against the surface of the application roller.

Preferably the first and second sealing means are oriented so as to present a lengthwise seal wherein the sealing means are secured to the first and second lengthwise edge forward of the rotational direction of the application roller.

It will be seen that embodiments of the invention can provide an improved agrichemical roller applicator which reduces or avoids crop contamination brought about by unwanted dispersal of the liquid or vapour agrichemical, and an improved agrichemical roller applicator which overcomes or at least mitigates a number of the abovementioned disadvantages or at least provide the public with a useful choice.

The invention will now be described by way of example and with reference to the drawings in which:
- Figure 1: illustrates a cross-sectional side view of an agrichemical roller applicator; and
- Figure 2: illustrates a cross-sectional side view of an alternative embodiment of an agrichemical roller applicator.

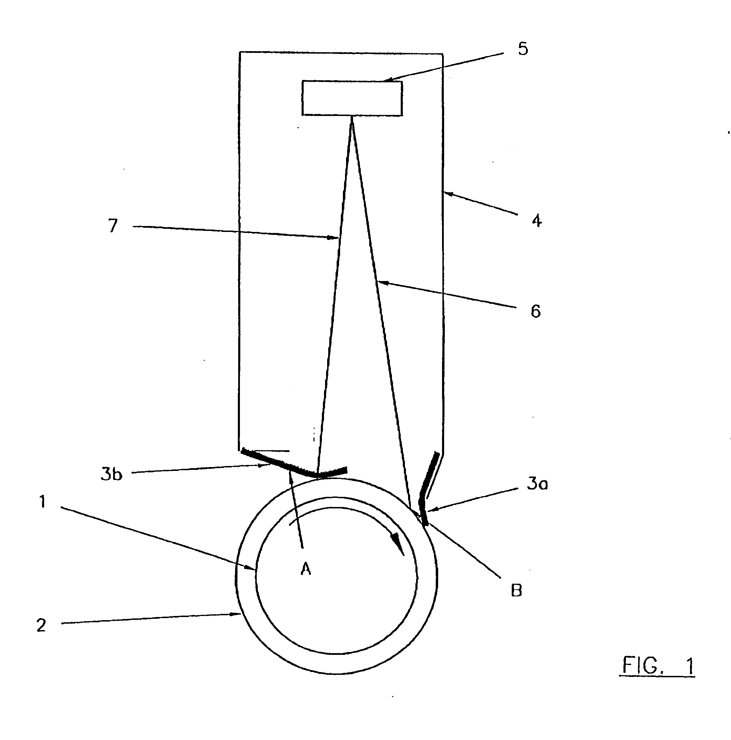

Referring to figure 1, an embodiment of an improved roller applicator is shown. Figure 1 illustrates a cross-section through the applicator roller and it is to be understood that the dimensions of the device can vary depending on the application width which is required. The application width corresponds to the 'swathe' or path which the roller makes as it is transported through the crop.

Further, the application roller may be in a number of discrete sections.

A dispersal means 5 is located inside an enclosure 4. The dispersal means and enclosure are understood to extend across the application width as is the roller 1 either continuously or in discrete sections.

The enclosure 4 in this embodiment, corresponds to a box like structure with a lengthwise opening 8 at the bottom. The lengthwise opening 8 is of a size which accommodates a portion of an application roller 1,2. The application roller 1,2 incorporates a central cylinder structure 1 and an external absorbent layer 2. The enclosure 4, dispersal means 5 and roller 1,2 are secured in their relative positions by means of a framework or similar structure (not shown). The application roller is driven by means known in the art and the agrichemical is piped to the dispersal means by means also known in the art. The framework (not shown) is also constructed so as to allow the vertical adjustment necessary to effect selective agrichemical application to the weeds.

Sealing means 3a and 3b are located along the first and second lengthwise edges of the lengthwise opening so as to form a continuous seal between the roller and the edges of the opening.

In the absence of the sealing means 3a and 3b unwanted agrichemical dispersion can occur through the gaps indicated by A and B. By sealing these gaps splashing, aerosol drift contamination onto the crop during agrichemical application is prevented.

Further, sealing the gaps A and B prevents air currents disturbing the agrichemical spray and thus dispersing it in an uncontrolled and potentially contaminating manner onto the crop.

A further function of the seals is that when the absorbent surface 2 of the roller 1,2 is coated with a liquid or gel agrichemical, the frictional effect caused by the sealing means 3a and 3b causes the liquid to froth thus providing a visual indication of the moisture level on the surface of the application roller.

In a preferred embodiment, the dispersal means corresponds to a spray nozzle. This spray nozzle allows the rapid and controlled application of liquid agrichemicals onto the length of the application roller. Further, such a dispersal device is a relatively light and of straightforward construction. Spray devices are also not susceptible to difficulties resulting from applying the chemicals on uneven terrain whereby sideways tilting of a reservoir roller results in uneven application of the herbicide to the application roller.

However, it is envisaged that dispersal means may take the form of reservoir rollers such as are known in the art. In this case, the size of the opening 8 would be varied to allow the reservoir roller to contact an upper surface of the application roller while the sealing means 3a and 3b are positioned so as to effectively seal the dispersal volume 7 from splashing and dripping.

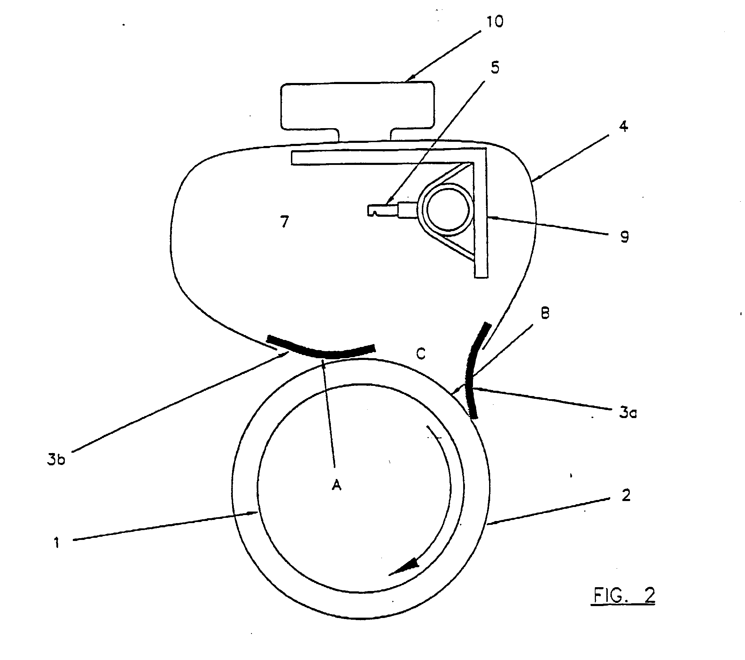

An alternative embodiment is shown in figure 2. In this case, the enclosure 4 is formed from moulded material such as steel or plastic. Other construction techniques include moulded fibreglass. A support member 9 is shown in cross-section to which is secured an agrichemical feed pipe 10 and spray nozzle 5. The spray nozzle 5 is oriented to emit the agrichemical downwardly and, in operation, coats the exterior of the application roller in the region marked C. The sealing means 3a and 3b provide effective sealing of the gaps A and B thereby preventing uncontrolled dispersal of the agrichemical by splashing or otherwise as well as shielding the dispersal volume 7 from the elements.

Referring to figure 1, the enclosure 4 may incorporated access panels which fold back to allow servicing of the dispersal means, in this case the spray nozzles. Alternatively, the spray nozzles in figure 2 may be attached to an elongate mounting beam 9,10 which can be removed in its' entirety.

In both embodiments shown in figure 1 and figure 2 the enclosures are sealed against the roller by means of flap or similar device.

The sealing means 3a and 3b are constructed from a resilient material such as butynol, rubber or a plastics substance. The sealing means should be sufficiently resilient to allow slight movement of the application roller 1 in relation to the enclosure 4 while providing sufficient stiffness so as to be effectively biased against the surface of the application roller 1 thus providing an effective seal.

In the present embodiments the sealing means 3a and 3b are oriented so that the seal narrows in the direction of rotation of the application roller. Other orientations are possible.

Thus it is seen that by the present invention the dispersal volume 7 is effectively sealed against the external environment so that the agrichemical application roller is coated in a controlled and contained environment thus reducing or preventing splashing or similar uncontrolled contamination of the crop. The present invention also controls the application of the agrichemical so as to prevent the agrichemical drifting out of the enclosure 7 in windy conditions.

Where in the foregoing description reference has been made to elements or integers having known equivalents, then such equivalents are included as if they were individually set forth.

Although the invention has been described by way of example and with reference to particular embodiments, it is to be understood that modifications and/or improvements may be made without departing from the scope of the invention.

## Claims

1. An improved agrichemical roller applicator comprising an application roller;
a controllable dispersal means adapted to supply an agrichemical product to the application roller;
an enclosure constructed so as to surround a segment of the application roller, and the dispersal means in such a manner that the dispersal means is located inside the enclosure and at least a portion of a surface of the application roller is located proximate an opening in the enclosure wherein the opening incorporates sealing means adapted to prevent dispersal of the agrichemical from the enclosure other than by its application to the portion of the application roller proximate the opening.

2. An improved agrichemical roller applicator as claimed in Claim 1 wherein the dispersal means is a spray nozzle or dispersal roller.

3. An improved agrichemical roller applicator as claimed in Claim 1 or Claim 2, wherein the enclosure is a elongate box structure incorporating a lengthwise opening having dimensions adapted to accommodate at least a portion of the application roller in such a manner that the dispersal means applies the agrichemical onto a portion of the application roller proximate the opening.

4. An improved agrichemical roller applicator as claimed in Claim 1, 2, or 3, wherein the sealing means correspond to elongate flaps attached to a first and second lengthwise edge of the lengthwise opening in the enclosure and are oriented so that when the application roller is located proximate the opening and rotated, a first and second sealing means present a lengthwise seal biased against the surface of the application roller.

5. An improved agrichemical roller applicator as claimed in any preceding Claim wherein the first and second sealing means are oriented so as to present a lengtwise seal wherein the sealing means are secured to the first and second lengthwise edge forward of the rotational direction of the application roller.
